# EUROPEAN PATENT APPLICATION

(11) **EP 4 691 707 A1**
(43) Date of publication of application: **11.02.2026**
(21) Application number: 24779423.3
(22) Date of filing: 12.03.2024
(51) Int. Cl.: B25J 13/08, C12M 1/00, G06F 3/0488

(54) **INFORMATION PROCESSING SYSTEM AND INFORMATION PROCESSING METHOD**

(30) Priority: 27.03.2023 JP 2023049840
(71) Applicant: HITACHI HIGH-TECH CORPORATION, Tokyo 105-6409 (JP)
(72) Inventor: KOSAKA, Junya, Tokyo 1056409 (JP); HORIUCHI, Tomohiro, Tokyo 1056409 (JP)
(74) Representative: Strehl & Partner mbB
(86) International application number: PCT/JP2024/009612
(87) International publication number: WO 2024/203293

(57) **Abstract**

An information processing system is disclosed, which enables a user to correct a machine operation to attain a desired machine operation. The information processing system includes an operation target device; a detection apparatus including a camera to capture an image of the device; a control apparatus having a storage circuitry to store a task program prescribing operations of the operation target device, which contains parameters of a velocity, a trajectory and a position when the device moves, and a controller circuitry to operate the device, based on the task program; and a terminal apparatus having an displayer circuitry to display the image captured by the camera, and an input circuitry to accept a user input. The controller circuitry issues an instruction to stop the device operation based on the task program in accordance with the user input to the input circuitry when the device is operated based on the task program, and correcting the device operation prescribed by the task program.

## Description

### [Field of the Invention]

The present invention relates to an information processing system and an information processing method.

### [Background Art]

Conventionally, in manufacturing sites and other equivalent places, predetermined repetitive operations have been automatically performed by machines exemplified by industrial robots. Life science industries have likewise accelerated the automized machine operations for regenerative medicine, cell manufacturing and other equivalent processes.

### [Prior Art Documents]

### [Patent Documents]

[Patent Document 1] Japanese Laid Open Patent Publication No. 2022-119943
[Patent Document 2] Japanese Laid Open Patent Publication No. 2021-24025
[Patent Document 3] International Publication No. WO 2012/029227

### [Summary]

### [Problem Statement]

Automation by industrial robots and other equivalent automated machines is suited to manufacturing same products by repetitive operations as previously designed. It is not, however, feasible to manufacture the same cells by the repetitive operations in some cases due to disturbances in manufacturing the cells when the cells and other equivalent organisms are manufactured in life science. The disturbances in cell manufacturing include, for example, disturbances from the culture medium environment (alterations due to ambient environments of the cells), disturbances from operations (alterations in cell characteristics due to actions and handling), and disturbances from the cells themselves (alterations in cell characteristics due to cell lifespans), and other equivalent disturbances. The disturbances in cell manufacturing make it difficult to automate cell production processes using machinery.

An aspect of the disclosure provides a technology to enable correction of the operation of an automated machine by a user, while reducing an influence on the automated machine operation.

### [Means for Solving the Problem]

To solve the problem, the following configuration is provided.

In a first aspect, an information processing system includes: an operation target device; a detection apparatus having a camera to capture an image of the operation target device; a control apparatus having a storage circuitry to store a task program prescribing operations of the operation target device, which contains parameters of a velocity, a trajectory and a position when the device moves; and a controller circuitry to operate the device, based on the task program; and a terminal apparatus having an displayer circuitry to display the image captured by the camera and an input circuitry to accept a user input, in which the controller circuitry issues an instruction to stop a device operation based on the task program in accordance with the user input to the input circuitry when the device is operated based on the task program, and corrects the device operation prescribed by the task program.

The aspect of the disclosure may be implemented by an information processing apparatus executing the program. A configuration of the disclosure may be embodied as a program for causing the information processing apparatus to execute processes to be carried out by the respective circuitries according to the aspect, and may also be embodied as a non-transitory computer readable recording medium storing the program readable by the information processing apparatus. The configuration of the disclosure may also be implemented by a method by which the information processing apparatus executes the processes to be carried out by the respective circuitries. The configuration of the disclosure may further be implemented by a system including the information processing apparatus executes the processes to be carried out by the respective circuitries. Note that the information processing apparatus is, e.g., a computer. The computer is referred to as a personal computer and a server as the case may be.

### [Effects of the Invention]

The technology of the disclosure enables a user to correct a machine operation while restraining an influence on the automated machine operation.

### [Brief Description of Drawings]

FIG. 1 is a diagram illustrating an example of a configuration of an information processing system in an embodiment;
FIG. 2 is a perspective view illustrating an example of a configuration of the information processing system according to the embodiment;
FIG. 3 is a diagram illustrating an example of a hardware configuration of an information processing apparatus;
FIG. 4 is a flowchart illustrating an example of an operation flow of how a control apparatus 100 creates a scenario;
FIG. 5 is a flowchart illustrating an example of a whole operation flow of how the control apparatus 100 executes and corrects the scenario;
FIG. 6 is a flowchart illustrating an operation flow for determining switchover to the manual operation mode in S203;
FIG. 7 is a flowchart illustrating an example of the operation flow of the manual operation mode in S205;
FIG. 8 is a diagram illustrating an example of a screen displayed on a displayer circuitry 204;
FIG. 9 is a flowchart illustrating an example of an operation flow of release determination in S403;
FIG. 10 is a flowchart illustrating an example of a velocity correction process in S406;
FIG. 11 is a flowchart illustrating an example of an operation flow of a trajectory correction process in S408;
FIG. 12 is a diagram illustrating an example of a screen displayed in a trajectory correction process;
FIG. 13 is a diagram illustrating an example of the screen displayed in the trajectory correction process;
FIG. 14 is a flowchart illustrating an example of an operation flow of a position correction process in S409;
FIG. 15 is a diagram illustrating an example of a screen displayed on the displayer circuitry 204;
FIG. 16 is a flowchart illustrating an example of an operation flow of the position correction in S803;
FIG. 17 is a flowchart illustrating an example of an operation flow of a timing correction process in S410; and
FIG. 18 is a diagram illustrating an example of the screen displayed on the displayer circuitry 204.

### [DETAILED DESCRIPTION OF THE EMBODIMENT]

Referring to the accompanying drawings, an embodiment will hereinafter be described. A configuration of the embodiment is an exemplification. A configuration of the invention is not limited to a specific configuration of the disclosed embodiment. In carrying out the invention, specific configurations corresponding to embodiments may be appropriately adopted.

### [Embodiment]

### (Example of Configuration)

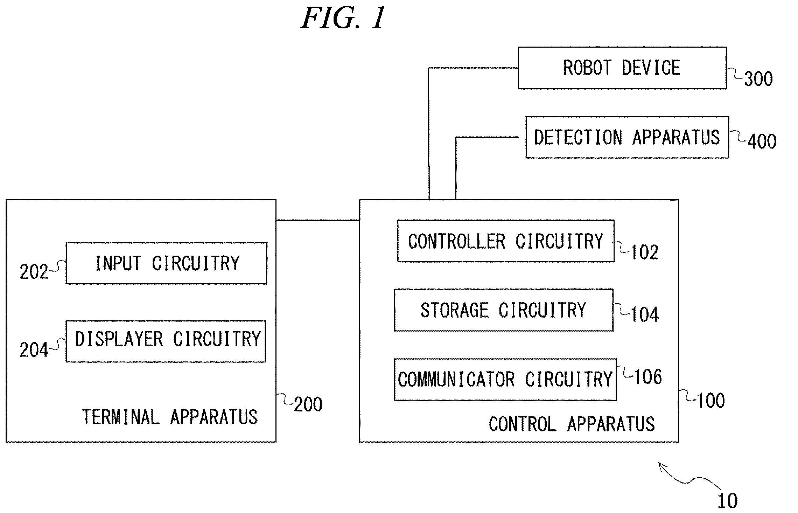

FIG. 1 is a diagram illustrating an example of a configuration of an information processing system according to the embodiment. An information processing system 10 includes a control apparatus 100, a terminal apparatus 200, a robot device 300, and a detection apparatus 400. The control apparatus 100 includes a controller circuitry 102, a storage circuitry 104, and a communicator circuitry 106. The terminal apparatus 200 includes an input circuitry 202 and a displayer circuitry 204. The control apparatus 100 is connected to the terminal apparatus 200, the robot device 300 and the detection apparatus 400 in a communication-enabled manner.

The information processing system 10 creates a scenario (task program) to be executed by the robot device 300, which operates processing target instruments, through user inputs and other equivalent operations from on the terminal apparatus 200 to the control apparatus 100. The scenario is a task program that indicates procedures of operations by the robot device 300. The control apparatus 100 operates the robot device 300, based on the created scenario. The detection apparatus 400 monitors the operations of the robot device 300 and outputs the monitored operations to a user via the terminal apparatus 200. When the robot device 300 operates based on the scenario, the control apparatus 100 accepts a user input for correcting the operations to the terminal apparatus 200 and modifies the scenario accordingly. Based on the scenario created by the control apparatus 100, the robot device 300 executes processes that are exemplified by cell manufacturing (cell culture) and other equivalent processes in life sciences. The robot device 300 performs operations of, e.g., sucking and moving liquid samples by the processing target instrument, and discharging the sucked liquid at a predetermined position. The samples may include, for example, chemical substances, and living organisms exemplified by bacteria and cells.

The control apparatus 100 includes the controller circuitry 102, the storage circuitry 104, and the communicator circuitry 106. The controller circuitry 102 controls operations of the terminal apparatus 200, the robot device 300, and the detection apparatus 400. The storage circuitry 104 stores various types of data and programs used by the control apparatus 100. The communicator circuitry 106 is a communication interface to transmit and receive the data to and from the terminal apparatus 200, the robot device 300 and the detection apparatus 400.

The terminal apparatus 200 includes the input circuitry 202 and the displayer circuitry 204. The terminal apparatus 200 is actualized by, for example, a tablet terminal, a personal computer, and other equivalent devices. The terminal apparatus 200 is an input/output unit.

The input circuitry 202 is an input unit to accept an information input from the user. The input circuitry 202 is exemplified by a keyboard, a pointing device, a wireless remote controller, a touch panel, a camera and a microphone. Herein, the touch panel serves as the input circuitry 202. The touch panel is acceptable of user operations (input operations through physical contacts) such as touches (taps) and swipes. The touch is an operation of touching the touch panel with a finger and releasing the finger from the touch panel. The swipe is an operation of moving the finger while maintaining contact with the touch panel. The touch and swipe on the touch panel may be substituted by click and drag operations of the pointing device. The touch and swipe on the touch panel may also be substituted by other input operations of other input devices.

The displayer circuitry 204 is a display device including a display screen to output information and other equivalent indications to the user and other equivalent persons. The displayer circuitry 204 is the display to display character information, images and other equivalent indications. The display screen of the displayer circuitry 204 may be provided with, e.g., the touch panel of the input circuitry 202. The displayer circuitry 204 may include a loudspeaker to output sounds.

The robot device 300 is a device that performs predetermined operations based on instructions from the control apparatus 100. The robot device 300 performs the operations of grasping, moving, and releasing the processing target instruments. The processing target instruments are exemplified by well plates, petri dishes, test tubes, beakers, flasks, containers, pipettes, and other equivalent instruments. The processing target instruments are not limited to the exemplified instruments. The robot device 300 operates the processing target instruments to apply predetermined processes to processing target samples. The robot device 300 is enabled to, for example, manipulate a processing target pipette to suck liquid serving as a sample from one well of a well plate and discharge the sample liquid into another well of the well plate.

The detection apparatus 400 is a sensor that detects the operations of the robot device 300 through a visual device. The detection apparatus 400 includes a camera that captures an image of an area covering both the robot device 300 and the processing target instruments manipulated by the robot device 300. The detection apparatus 400 may further include a sensor that detects conditions of the processing target samples.

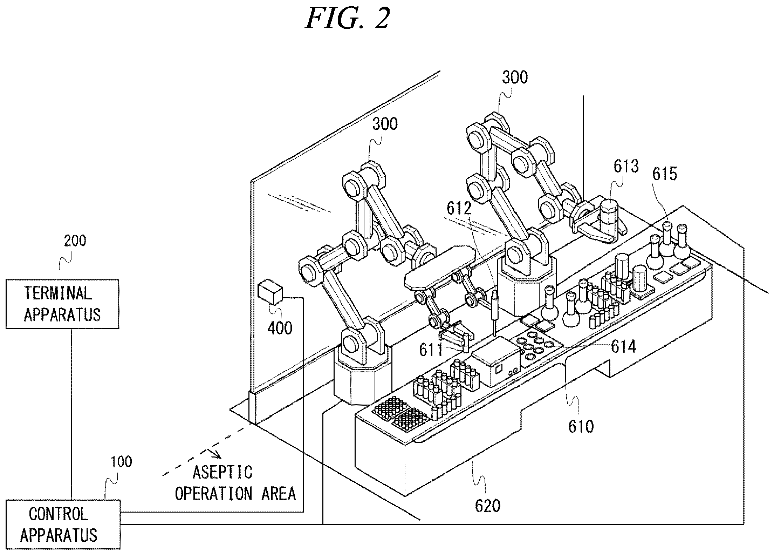

FIG. 2 is a perspective view illustrating an example of a configuration of the information processing system according to the embodiment. The information processing system 10 includes the control apparatus 100, the terminal apparatus 200, the robot device 300, and the detection apparatus 400. Provided is a table 620 on which to place a plurality of processing target instruments 610 manipulated by the robot device 300. The instruments 610 include test tubes 611, pipettes 612, containers 613, well plates 614, flasks 615, and other equivalent instruments. The robot device 300 manipulates each of the test tubes 611, the pipettes 612, and the containers 613 that are included in the instruments 610. The camera of the detection apparatus 400 captures the image of the robot device 300 and the images of the plurality of instruments 610.

The robot device 300 in FIG. 2 includes a base disposed on a floor. The robot device 300 further includes a rotatable joint unit connected to the base and an arm connected to the joint unit. A further joint unit and a further arm are connected to an end of the proximal arm. A gripping unit for grasping the instrument 610 is connected to a tip of the distal arm. The robot device 300 moves and manipulates the instrument 610 with the aid of the joint units, the arms, and the gripping unit. Images captured by the detection apparatus 400 (camera) are displayed on the displayer circuitry 204 of the terminal apparatus 200, for example, via the control apparatus 100. The robot device 300, the table 620, the instruments 610 are disposed in an area for the aseptic operation and other equivalent operations. The instruments 610 are disposed in the area for the aseptic operation and other equivalent operations, thereby making it feasible to restrain foreign matters from contaminating the samples. Other devices exemplified by a device for transporting the instruments 610 may also be disposed in the area for the aseptic operation and other equivalent operations. The terminal apparatus 200 is disposed outside the area for the aseptic operation and other equivalent operations and may be operated by the user. The information processing system 10 may attain feasibility of using the area for the aseptic operation and other equivalent operations as a cleanliness controlled area that does not require human entry.

The control apparatus 100 is implemented by employing a dedicated or general-purpose computer exemplified by a PC (Personal Computer) or a workstation (WS, Work Station), or an electronic device equipped with a computer. Alternatively, the terminal apparatus 200 is implementable by using a dedicated or general-purpose computer exemplified by the PC, a smartphone, a mobile phone, a tablet terminal and a PDA (Personal Digital Assistant), or the electronic device equipped with the computer.

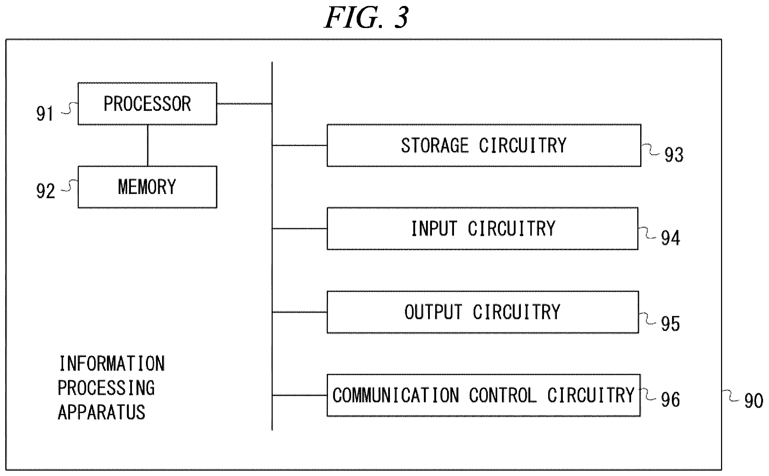

FIG. 3 is a diagram illustrating an example of a hardware configuration of an information processing apparatus 90. The information processing apparatus 90 illustrated in FIG. 3 has a configuration of a general type of computer. The control apparatus 100 and the terminal apparatus 200 are each implemented by an information processing apparatus 90 having the configuration in FIG. 3. The information processing apparatus 90 in FIG. 3 includes a processor 91, a memory 92, a storage circuitry 93, an input circuitry 94, an output circuitry 95, and a communication control circuitry 96. These components are interconnected via a bus. The memory 92 and the storage circuitry 93 are non-transitory computer readable storage mediums. The hardware configuration of the computer is not limited to the example illustrated in FIG. 3 but may be flexible by properly omitting, replacing and adding the components.

The information processing apparatus 90 is enabled to implement functions conforming to predetermined purposes by loading programs stored on a recording medium onto a work area of the memory 92 and executing the programs, and controlling the respective component circuitries through the execution of the programs.

The processor 91 is, for example, a CPU (Central Processing Unit) and a DSP (Digital Signal Processor).

The memory 92 includes, e.g., a RAM (Random Access Memory) and a ROM (Read Only Memory). The memory 92 is also called a main storage device.

The storage circuitry 93 is, for instance, an EEPROM (Erasable Programmable ROM), a Hard Disk Drive (HDD), and a Solid State Drive (SSD). The storage circuitry 93 may include a removable medium, i.e., a portable recording medium. The removable medium is a USB (Universal Serial Bus) memory or a disc recording medium exemplified by a CD (Compact Disc) and a DVD (Digital Versatile Disc). The storage circuitry 93 is also called a secondary storage device.

Stored on the storage circuitry 93 are an Operating System (OS), multiple programs, various forms of tables and various types of data. Information to be stored on the storage circuitry 93 may also be stored on the memory 92. Information to be stored on the memory 92 may also be stored on the storage circuitry 93.

The OS is software that performs intermediary between the software and the hardware, a memory space management, a file management, a process management, a task management, and other equivalent managements. The OS includes an communication interface. The communication interface is a program running to transmit and receive data to and from other external connected devices via the communication control circuitry 96. The external connected devices include, e.g., other computers, external storage devices, and other equivalent devices.

The input circuitry 94 includes a keyboard, a pointing device, a wireless remote controller, a touch panel, and other equivalent devices. The input circuitry 94 may include a video-image input device exemplified by a camera, and a voice-sound input device exemplified by a microphone.

The output circuitry 95 includes a display device exemplified by an LCD (Liquid Crystal Display), an EL (Electroluminescence) panel, a CRT (Cathode Ray Tube) display, and a PDP (Plasma Display Panel), and an output device exemplified by a printer. The output circuitry 95 may include an output device exemplified by a loudspeaker.

The communication control circuitry 96 controls communications between the information processing apparatus 90 and other devices by being connected to other devices. The communication control circuitry 96 is exemplified by a LAN (Local Area Network) interface board, a wireless communication circuit for wireless communications, and a communication circuit for wired communications. The LAN interface board and the wireless communication circuit are connected to a network exemplified by Internet.

A processor of the computer configured to implement the control apparatus 100 loads programs stored on an auxiliary storage device onto a main storage device and executes the programs, thereby implementing functions as the controller circuitry 102 and the communicator circuitry 106. The storage circuitry 104 is provided in a storage area of the main storage device or the auxiliary storage device.

### (Example of Operation)

An example of the operation of the information processing system 10 will be described. The control apparatus 100 of the information processing system 10 creates a scenario to be executed by the robot device 300 that operates the operation targets through user inputs to the terminal apparatus 200. The scenario is a task program indicating procedures of device operations of the operation target robot device 300. The scenario (task program) created by the control apparatus 100 includes parameters of a position, a trajectory and a velocity of movement of the operation target device, thereby prescribing, based on the parameters, the operations of the operation target device. The scenario is exemplified by processes in cell manufacturing. The robot device 300 operates based on the created scenario, during which the control apparatus 100 of the information processing system 10 accepts user inputs to correct the operations to the terminal apparatus 200, thus modifying the scenario. The scenario prescribes the whole operations of the operation target device so as not to change afterwards. Detailed settings of the operations may be changed in a manual operation mode during an execution period of the scenario. The changeable settings are limited, whereby the control apparatus 100 enables tasks to be reduced in the manual operation mode.

### <Creation of Scenario>

A process of how the control apparatus 100 creates the scenario will herein be described. When the scenario is created, the control apparatus 100 enables the robot device 300 to operate based on the created scenario.

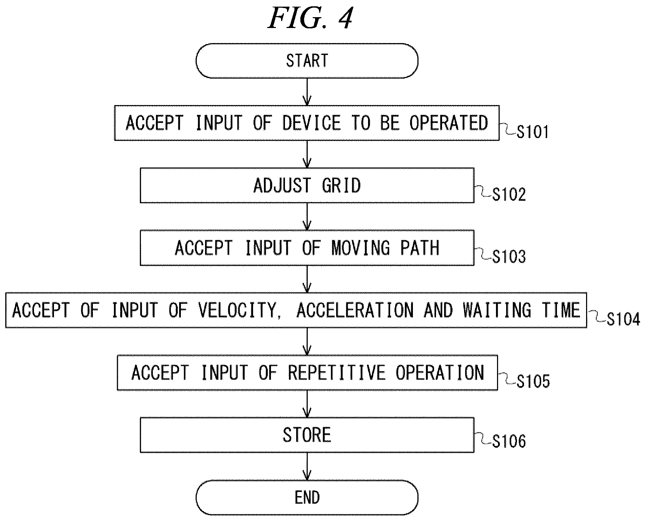

FIG. 4 is a flowchart illustrating an example of an operation flow of how the control apparatus 100 creates the scenario. In the scenario, for example, the control apparatus 100 causes the robot device 300 to move the well plate 614 to a predetermined position, to suck the liquid contained in the well of the well plate 614 with the pipette 612, to move the pipette 612, and to discharge the liquid from the pipette 612.

In S101, the controller circuitry 102 of the control apparatus 100 accepts inputs of the devices to be operated when executing the scenario. The devices to be operated when executing the scenario are, e.g., the robot device 300 and the pipette 612. The devices to be operated when executing the scenario may also be an actuator and other equivalent devices. The controller circuitry 102 causes the displayer circuitry 204 of the terminal apparatus 200 to display a screen for accepting the inputs of the devices to be operated when executing the scenario. Displayed on the screen are, e.g., icons indicating the devices being operable when executing the scenario. The input circuitry 202 of the terminal apparatus 200 accepts the user inputs (selections of the icons indicating the devices) of the devices to be operated when executing the scenario. The user inputs by touching the icons indicating the devices to be operated while viewing the screen displayed on the displayer circuitry 204 of the terminal apparatus 200. The user inputs a sequential order of operating all the devices to be operated when executing the scenario. One device is operated a plural number of times in one scenario, in which case this single device may be selected and inputted a plural number of times. The controller circuitry 102 accepts device information inputted through the input circuitry 202 of the terminal apparatus 200 from the terminal apparatus 200. The controller circuitry 102 stores the inputted device information in the storage circuitry 104. The controller circuitry 102 displays the inputted devices in the inputted sequential order on the screen displayed on the displayer circuitry 204 of the terminal apparatus 200. The user views the screen and is thereby enabled to check the inputted devices and the sequential order of the operations.

In S102, the controller circuitry 102 executes a grid adjusting process. A grid is defined as closing lines serving as reference marks when specifying a start position and an end position of the operation. A grid width (a space between adjacent vertical lines) and a grid height (a space between adjacent horizontal lines) may be adjusted. The controller circuitry 102 displays the grid together with the operation target device on the displayer circuitry 204 of the terminal apparatus 200. The controller circuitry 102 displays the screen on which to accept the grid width and the grid height on the displayer circuitry 204 of the terminal apparatus 200. The grid width and the grid height may be specified by, e.g., numerical values. The controller circuitry 102 may also input the grid width and the grid height by manipulating an input bar (slid bar) displayed on the screen. The controller circuitry 102 may further display, e.g., an icon for adjusting the grid width and the grid height on the displayer circuitry 204 of the terminal apparatus 200. The icon is exemplified by a width enlarging icon, a width diminishing icon, a height increasing icon, and a height decreasing icon. The controller circuitry 102 determines which icon is selected via the input circuitry 202. When the width enlarging icon is selected, the controller circuitry 102 settles to enlarge, by a predetermined value, the grid width to be displayed. When the width diminishing icon is selected, the controller circuitry 102 settles to diminish, by a predetermined value, the grid width to be displayed. When the height increasing icon is selected, the controller circuitry 102 settles to increase, by a predetermined value, the grid height to be displayed. When the height decreasing icon is selected, the controller circuitry 102 settles to decrease, by a predetermined value, the grid height to be displayed. When other dimensions are inputted, the controller circuitry 102 may settle to change the grid width and the grid height to those based on the inputted dimensions. The controller circuitry 102 updates the grid displayed on the screen of the displayer circuitry 204 with the settled grid width and grid height. The start position and the end position of the operation are each specified by a central position of a grid cell. When desiring to minutely set the start position and other positions, the spaces between the closing lines of the grid are reduced (smaller grid cells), thereby enabling the desired start position and other positions to be set. When the start position and other positions may not be set minutely, the spaces between the closing lines of the grid are enlarged, thereby facilitating the setting of the start position and other positions.

In S103, the controller circuitry 102 of the control apparatus 100 accepts an input of a moving path of the device, which is inputted in S101. The controller circuitry 102 displays the screen to accept the input of the moving path of the device on the displayer circuitry 204 of the terminal apparatus 200. The moving path may be specified by, e.g., the start position of the device to move (a start point of the operation of the device concerned) and the end position (an end point of the operation of the device concerned). The moving path may contain an intermediate position between the start position and the end position. For example, an input box in which to input coordinates of the respective positions is displayed on the screen. The input circuitry 202 accepts inputs of the coordinates to the input box. The controller circuitry 102 works the camera of the detection apparatus 400 to capture images of peripheries of the device to be operated, and may display the captured images on the screen. The input circuitry 202 accepts touch inputs on the screen as the inputs of the coordinates. The input circuitry 202 may also accept the input of the moving path through a swipe operation that traces the touch panel from the start position up to the end position. The controller circuitry 102 converts the touch inputs accepted by the input circuitry 202 into actual coordinates. The moving path includes operations peculiar to the respective devices. For example, the target instrument is the pipette, in which case a quantity of the liquid to be sucked and a quantity of the liquid to be discharged are included. The input circuitry 202 accepts inputs of the information on the operations peculiar to these devices as the inputs of the moving paths. The controller circuitry 102 accepts the inputs of the moving paths of all the devices to be moved. The controller circuitry 102 stores, in the storage circuitry 104, the inputted information on the moving paths. The controller circuitry 102 displays the inputted moving paths of the devices on the screen displayed on the displayer circuitry 204 of the terminal apparatus 200. The user views the screen, and is thereby enabled to check the inputted moving paths of the devices.

In S104, the controller circuitry 102 of the control apparatus 100 accepts inputs of a velocity, an acceleration and waiting time about the moving path inputted in S103. The controller circuitry 102 displays the screen to accept the inputs of the moving path, the velocity, the acceleration and the waiting time on the displayer circuitry 204 of the terminal apparatus 200. The velocity, the acceleration and the waiting time may be specified by, e.g., the numerical values. The controller circuitry 102 may display a plurality of icons representing the velocity, the acceleration, and the waiting time as options on the screen, whereby the user may select any one of the icons. The controller circuitry 102 may also display an input bar (sliding bar) for the velocity, the acceleration, and the waiting time on the screen, whereby the user may perform inputting through the operation of the input bar. The input circuitry 202 accepts the user inputs of the velocity, the acceleration, and the waiting time. The controller circuitry 102 accepts parameters of the velocity, the acceleration and the waiting time for all the instruments to be moved. The controller circuitry 102 stores information of the inputted velocity, acceleration and waiting time in the storage circuitry 104. When none of the velocity, the acceleration and the waiting time are inputted, the controller circuitry 102 may store default values of the velocity, the acceleration and the waiting time in the storage circuitry 104. The controller circuitry 102 displays the inputted velocity, acceleration and waiting time of each of the devices on the screen displayed on the displayer circuitry 204 of the terminal apparatus 200. The user views the screen and is thereby enabled to check the inputted velocity, acceleration and waiting time of each of the devices.

In S105, the controller circuitry 102 of the control apparatus 100 accepts the inputs of repetitive operations. The inputs of the repetitive operations are a number of times of repetitions when repeating the operations of the device, which are inputted in S101 through S104. The controller circuitry 102 displays the screen to accept the inputs of the repetitive operations on the displayer circuitry 204 of the terminal apparatus 200. The Repetitive operations are specified by how many times they are repeated and from which device operation to which device operation. The input circuitry 202 accepts the user input of the repetitive operations. The controller circuitry 102 stores the inputted information of the repetitive operations in the storage circuitry 104. The input of the repetitive operations is accepted, whereby it is feasible to restrain the same operation of the same device from being inputted a plural number of times. The controller circuitry 102 displays the inputted repetitive operations on the screen displayed on the displayer circuitry 204 of the terminal apparatus 200. The user views the screen and is thereby enabled to check the inputted repetitive operations.

In S106, the controller circuitry 102 stores, in the storage circuitry 104, a single scenario configured to include the operations of each device, which are inputted in S101 through S105 and stored in the storage circuitry 104. Hereat, the controller circuitry 102 may accept inputting a scenario name through the input circuitry 202. The controller circuitry 102 stores the inputted scenario name by being associated with the scenario concerned. The scenario is thus created.

### <Execution and Correction of Scenario>

Execution and correction of the scenario created by the control apparatus 100 will herein described. When the scenario is created, the control apparatus 100 is enabled to operate the robot device 300, based on the scenario stored in the storage circuitry 104. The control apparatus 100 may accept correction of the scenario while executing the scenario. Herein, it is assumed that the control apparatus 100 accepts corrections of the velocity, the path and the position.

### <<Whole Operation Flow>>

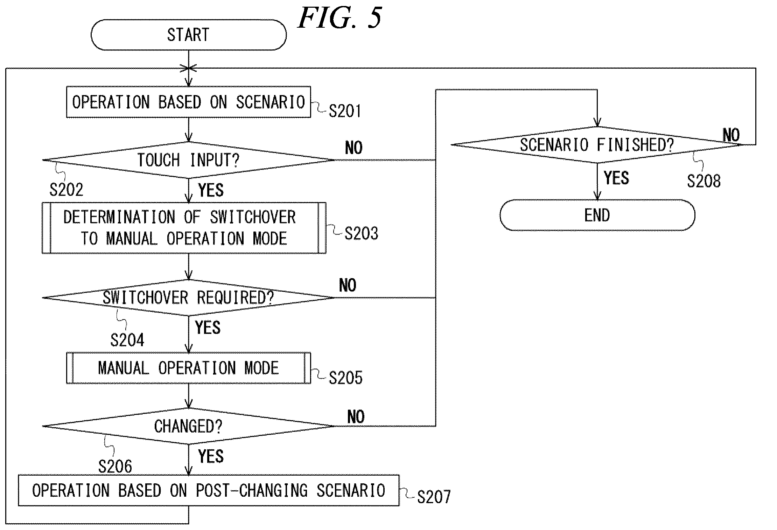

FIG. 5 is a flowchart illustrating an example of a whole operation flow of how the control apparatus 100 implements and corrects the scenario. Herein, the scenario created based on the operation flow in FIG. 4 is executed.

In S201, the controller circuitry 102 of the control apparatus 100 extracts an execution target scenario stored in the storage circuitry 104, and operates the robot device 300 and other equivalent devices, based on the extracted scenario. To be specific, the scenario is executed in an auto-operation mode. The controller circuitry 102 operates the camera of the detection apparatus 400 to capture the images of the peripheries to the robot device 300 operating based on the scenario. The controller circuitry 102 displays the images captured by the camera of the detection apparatus 400 on the displayer circuitry 204. The user is enabled, from the images displayed on the displayer circuitry 204, to check the operations of the robot device 300 and other equivalent devices.

In S202, the controller circuitry 102 determines whether the touch input is detected from on the input circuitry 202 of the terminal apparatus 200. The touch input is detected in such a way that a user finger touches the touch panel of the input circuitry 202. The user touches the touch panel of the input circuitry 202 with the finger, which indicates a sign that the user desires to correct the scenario in the process of being executed. Namely, when desiring to correct the scenario for the operations of the device during the execution, the user contacts the touch panel of the input circuitry 202 with the finger and other equivalent physical parts. Herein, a position at which to detect the touch input of the user may be any position on the touch panel of the input circuitry 202. The position at which to detect the touch input of the user may also be limited to a specific area of the touch panel. When detecting the touch input (S202; YES), the processing proceeds to S203. When not detecting the touch input (S202; NO), the processing diverts to S208.

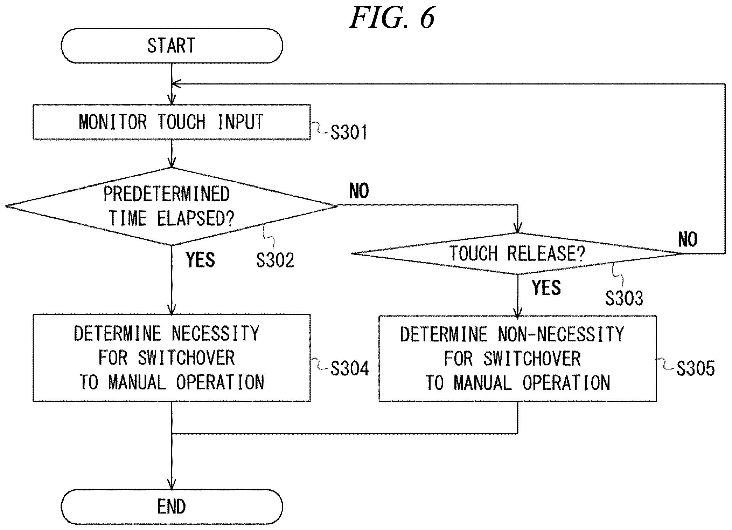

In S203, the controller circuitry 102 determines whether the operation is switched to a manual operation mode. The manual operation mode is a mode for correcting the scenario. Details of S203 will be described with reference to an operation flow in FIG. 6.

In s204, the controller circuitry 102 determines, based on the result of the determination in S203, whether the switchover to the manual operation mode is performed. When the determination result in S203 indicates the switchover required (S204; YES), the processing proceeds to S205. When the determination result in S203 indicates the switchover unrequired (S204; NO), the processing diverts to S208.

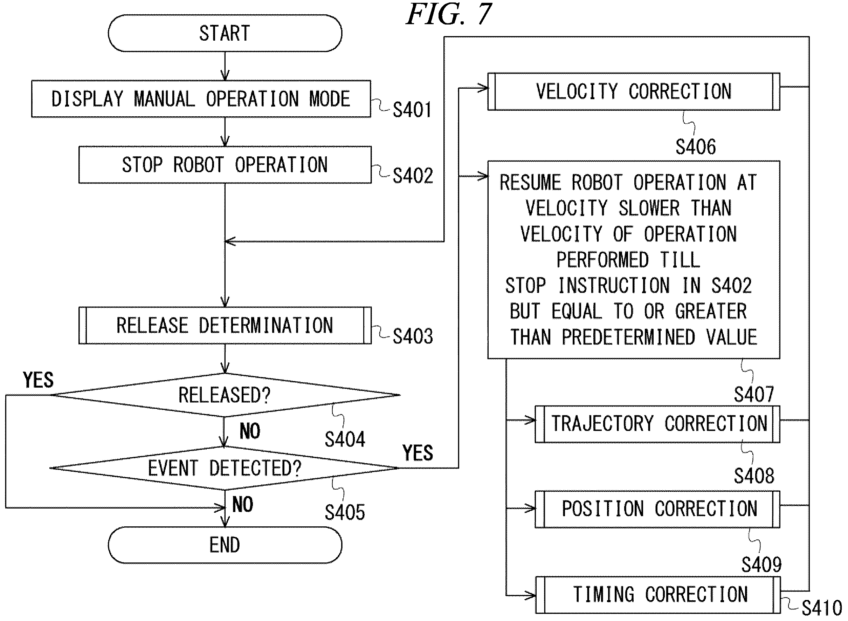

In S205, the controller circuitry 102 switches the operation to the manual operation mode, and carries out a predetermined process. Details of S205 will be described with reference to an operation flow in FIG. 7.

In S206, the controller circuitry 102 determines whether the scenario is changed in S205. When the scenario is changed (S206; YES), the processing proceeds to S207. When the scenario is not changed (S206; NO), the processing proceeds to S208.

In S207, the controller circuitry 102 returns the positions of the robot device 300 and other equivalent devices to initial positions (from which the scenario starts). The controller circuitry 102 operates the robot device 300 and other equivalent devices, based on the post-changing scenario stored in the storage circuitry 104. Thereafter, the processing loops back to S201. After the return, the controller circuitry 102 similarly operates the robot device 300 and other equivalent devices, based on the post-changing scenario.

In S208, the controller circuitry 102 determines whether the operation based on the currently executing scenario is finished. When the operation based on the currently executing scenario is finished (S208; YES), the processing of the operation flow in FIG. 5 is finished. When the operation based on the currently executing scenario is not finished (S208; NO), the processing loops back to S201.

The user is thereby enabled to correct the scenario during the execution of the scenario.

### <<Operation Flow of Determination of Switchover of Manual Operation Mode>>

FIG. 6 is a flowchart illustrating an operation flow for determining the switchover to the manual operation mode in S203.

In S301, the controller circuitry 102 monitors the touch input on the input circuitry 202 of the terminal apparatus 200. In other words, the controller circuitry 102 monitors whether the touch input is conducted on the input circuitry 202.

In S302, the controller circuitry 102 determines whether a predetermined period of time (e.g., 100ms) elapses since the touch input is detected in S202. The predetermined period of time is a threshold value for determining whether the user touch input intends to switch the operation to the manual operation mode. When the predetermined period of time elapses (S302; YES), the processing proceeds to S304. When the predetermined period of time does not elapse (S302; NO), the processing diverts to S303.

In S303, the controller circuitry 102 determines whether the touch input is conducted through monitoring in S301. When the touch input is not conducted, it is determined that the user does not desire the switchover to the manual operation mode. This is because the touching time on the input circuitry 202 is shorter than the predetermined period of time. When the touch input is conducted (S303; NO), the processing loops back to S301. When the touch input is not conducted (S303; YES), the processing proceeds to S305.

In S304, the controller circuitry 102 determines that the switchover to the manual operation mode is required. The touch input is detected longer than the predetermined period of time, and hence it is interpreted that the user desires the switchover to the manual operation mode.

In S305, the controller circuitry 102 determines that the switchover to the manual operation mode is not required. The touch input gets undetected before the predetermined period of time elapses, and it is therefore interpreted that the user does not desire the switchover to the manual operation mode. It is thereby feasible to restrain the shift to the manual operation mode when the user mistakenly contacts the touch panel of the input circuitry 202.

### <<Operation Flow of Manual Operation Mode>>

FIG. 7 is a flowchart illustrating an example of the operation flow of the manual operation mode in S205.

In S401, the controller circuitry 102 displays such an indication on the displayer circuitry 204 of the terminal apparatus 200 that the mode of the currently executing scenario is the manual operation mode. For example, the controller circuitry 102 displays character information indicative of "manual operation mode" on the displayer circuitry 204. The user views the display and is thereby enabled to check that the current mode is the "manual operation mode".

In S402, the controller circuitry 102 instructs stopping the operations of the currently working robot device 300 and other equivalent devices. The operations of the currently working robot device 300 and other equivalent devices are thereby decelerated. For example, the robot device 300 receives a different instruction before stopping the operation, in which case the robot device 300 may operate according to this instruction before stopping the operation.

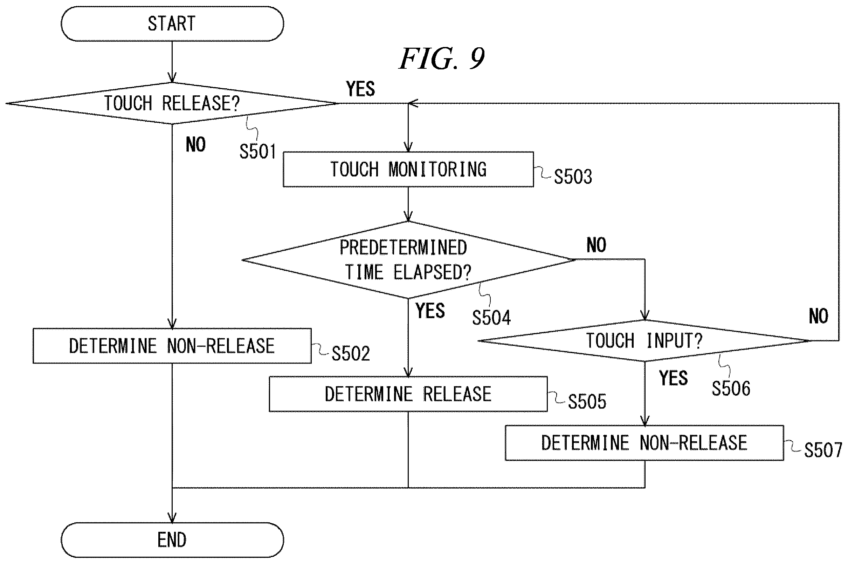

In S403, the controller circuitry 102 makes a release determination. The release determination is to determine whether the user operates the touch panel of the input circuitry 202. When the user does not operate the touch panel, the manual operation mode is finished. Details of S403 will be described with reference to an operation flow in FIG. 9.

In S404, the controller circuitry 102 determines, based on the result of the determination in S403, whether the manual operation mode continues. When the determination result in S403 indicates "non-release" (S404; NO), the processing proceeds to S405. When the determination result in S403 indicates "release" (S404; YES), the processing is finished. In this case, it is interpreted that the user has no intention to continue the manual operation (to continue the correction of the scenario). When the velocity of the operation target device is decreased in S407, the controller circuitry 102 may return the velocity of the operation target device to the velocity of the operation performed until the stop instruction in S402 was issued. The controller circuitry 102 may return the velocity at a maximum acceleration, and may also return the velocity on a step-by-step basis.

In S405, the controller circuitry 102 determines whether an event is detected on the input circuitry 202. Herein, the event connotes selecting correctable (changeable) parameters (exemplified by velocity, trajectory (path), position, and timing) at the point of present time. The controller circuitry 102 displays, on the displayer circuitry 204, icons representing the correctable parameters at the point of present time. The controller circuitry 102 determines that the event is detected when detecting the selection of any one of the icons through the input circuitry 202. The selection of the event is not limited to the selection of the icon but may be performed by other methods (of inputting the characters, carrying out predetermined operations, and other equivalent operations). It is herein assumed that "velocity", "trajectory". "position" and "timing" are given as the correctable parameters. The correctable parameters may include other concepts. The correctable parameters may be previously set for every operation target device. When detecting the event "velocity" (S405; YES), the processing diverts to S406. When detecting the event "trajectory" (S405; YES), the processing diverts to S407 and thereafter proceeds to S408. When detecting the event "position" (S405; YES), the processing diverts to S407 and thereafter proceeds to S409. When detecting the event "timing" (S405; YES), the processing diverts to S407 and thereafter proceeds to S410. When detecting none of the parameters (S405; NO), the processing is finished. The velocity of the operation target device is decreased in S407, in which case the controller circuitry 102 may return the velocity of the operation target device to the velocity of the operation performed until the stop instruction in S402 was issued. When returning the velocity, the controller circuitry 102 may return the velocity at the maximum acceleration, and may also return the velocity on the step-by-step basis.

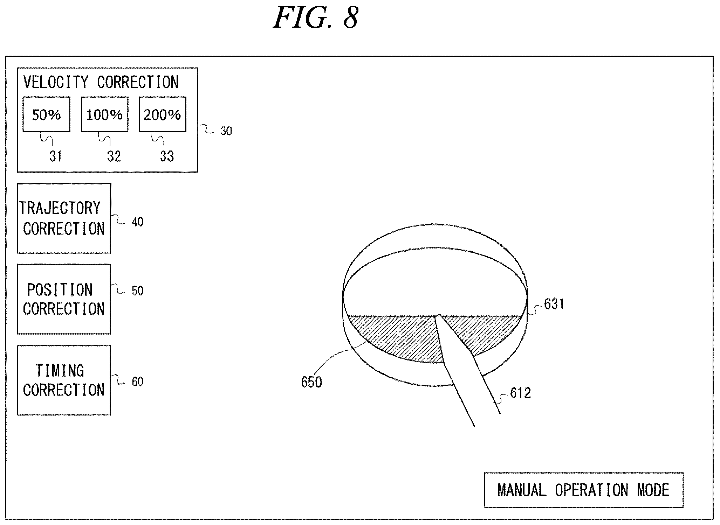

FIG. 8 is a diagram illustrating an example of the screen displayed on the displayer circuitry 204. Displayed on the screen in FIG. 8 are a velocity correction icon 30 indicating that the velocity is correctable, a trajectory correction icon 40 indicating that the trajectory is correctable, a position correction icon 50 indicating that the position is correctable, and a timing correction icon 60 indicating that the timing is correctable. The velocity correction icon 30 includes a 50% icon 31 for setting 50% for the device velocity, a 100% icon 32 for setting 100% for the device velocity, and a 200% icon 33 for setting 200% for the device velocity. It is determined that the event "velocity" is detected when the 50% icon 31, the 100% icon 32 and the 200% icon 33 of the velocity correction icon 30 are selected. When the trajectory correction icon 40 is selected, it is determined that the event "trajectory" is detected. When the position correction icon 50 is selected, it is determined that the event "position" is detected. When the timing correction icon 60 is selected, it is determined that the event "timing" is detected. Displayed further on the screen in FIG. 8 are the pipette 612 as the processing target instrument, a well 631 of the well plate 614 as the processing target instrument, and a liquid 650 reserved in the well 631, the images of which are captured by the camera of the detection apparatus 400. Character information of "manual operation mode" indicating the manual operation mode is still further displayed on the screen in FIG. 8.

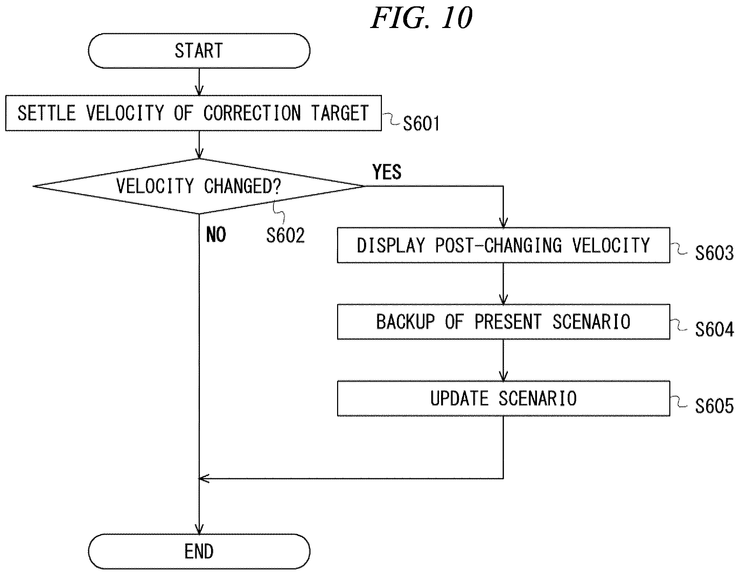

In S406, the controller circuitry 102 executes a velocity correction process. Details of S406 will be described with reference to an operation flow in FIG. 10. Thereafter, the processing goes back to S403.

In S407, the controller circuitry 102 resumes the operations, having received the stop instruction in S402, of the robot device 300 and other equivalent devices at a velocity being slower than the velocity of the operation performed until the stop instruction in S402 was issued and being equal to or higher than a predetermined value. For example, the controller circuitry 102 resumes the operations at a velocity equal to or higher than 40% but less than 60% of the velocity (original velocity, the previous operating speed) of the operation performed until the stop instruction in S402. Namely, the velocity of the operation target device is decreased. The decrease in velocity of the operation of the operation target device facilitates the correction of the scenario. Hereat, the operation target device is set desirably to the designated velocity at the maximum acceleration. The operation target device is set to the designated velocity at the maximum acceleration, whereby the control apparatus 100 enables a smooth shift to the manual operation mode without letting the user being aware of the mode switchover.

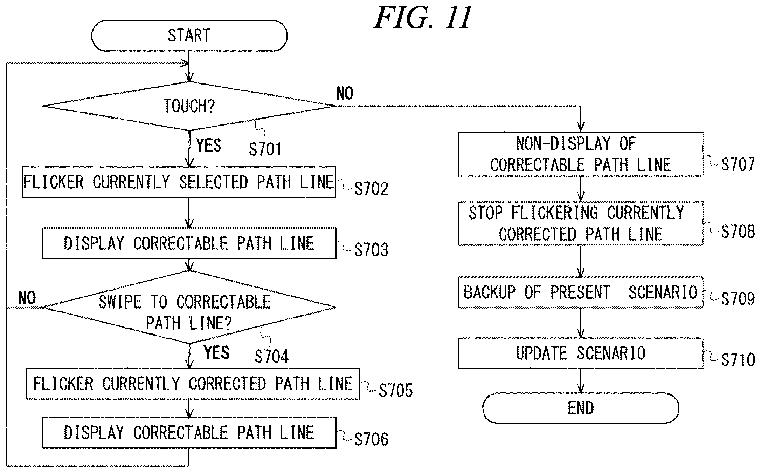

In S408, the controller circuitry 102 executes a trajectory correction process. Details of S408 will be described with reference to an operation flow in FIG. 11. Thereafter, the processing goes back to S403.

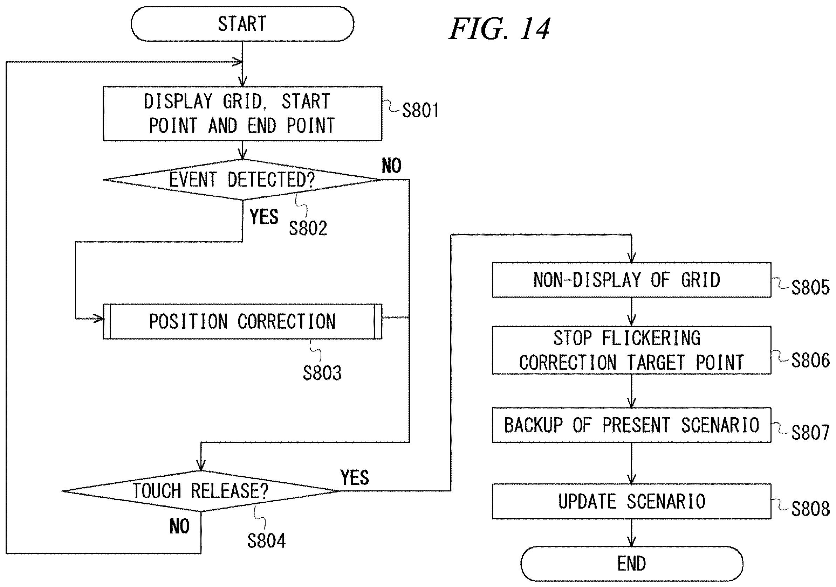

In S409, the controller circuitry 102 executes a position correction process. Details of S409 will be described with reference to an operation flow in FIG. 14. Thereafter, the processing goes back to S403.

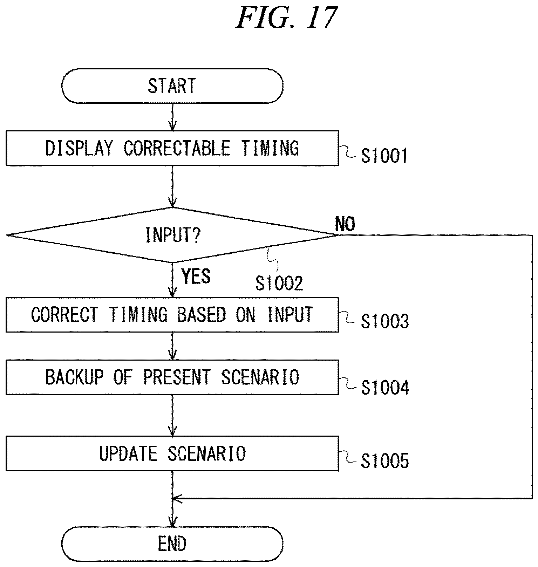

In S410, the controller circuitry 102 executes a timing correction process. Details of S410 will be described with reference to an operation flow in FIG. 17. Thereafter, the processing goes back to S403.

### <<Operation Flow of Release Determination>>

FIG. 9 is a flowchart illustrating an example of the release determination in S403.

In S501, the controller circuitry 102 determines whether a touch release is detected on the input circuitry 202. The touch release represents that the user finger and other equivalent physical parts do not contact the touch panel of the input circuitry 202. A state that the user finger and other equivalent physical parts contact the touch panel does not indicate the touch release. When the touch release is not detected (the user finger and other equivalent physical parts contact the touch panel of the input circuitry 202) (S501; NO), the processing proceeds to S502. When the touch release is detected (S501; YES), the processing diverts to S503.

In S502, the controller circuitry 102 determines that the touch release is not detected. The touch input is detected, and hence it is interpreted that the user desires continuation of the manual operation mode.

In S503, the controller circuitry 102 monitors the touch input on the input circuitry 202 of the terminal apparatus 200. To be specific, the controller circuitry 102 monitors whether the touch input is conducted on the input circuitry 202.

In S504, the controller circuitry 102 determines whether a predetermined period of time (e.g., 100ms) elapses since the detection of the touch release in S501. The predetermined period of time is a threshold value for determining whether the touch release of the user intends to the continuation of the manual operation mode. When the predetermined period of time elapses (S504; YES), the processing proceeds to S505. When the predetermined period of time does not elapse (S504; NO), the processing diverts to S506.

In S505, the controller circuitry 102 determines that the touch release is conducted. The touch input is not detected for a period equal to or longer than the predetermined period of time, and it is therefore interpreted that the user does not desire the continuation of the manual operation mode.

In S506, the controller circuitry 102 determines whether the touch input is conducted. When the touch input is conducted, it is determined that the user desires the continuation of the manual operation mode. This is because a time length (touch release time) for which the user releases the finger and other equivalent physical parts from the touch panel of the input circuitry 202 is shorter than the predetermined period of time. When the touch input is conducted (S506; YES), the processing proceeds to S507. When the touch input is not conducted (S506; NO), the processing goes back to S503.

In S507, the controller circuitry 102 determines that the touch release is not conducted. The touch input is detected, and hence it is interpreted that the user desires the continuation of the manual operation mode.

### <<Operation Flow of Velocity Correction Process>>

FIG. 10 is a flowchart illustrating an example of a velocity correction process in S406.

In S601, the controller circuitry 102 determines which velocity is selected. The controller circuitry 102 determines which velocity is selected in the event "velocity" through the input circuitry 202. For instance, as in FIG. 8, the 50% icon 31, the 100% icon 32 and the 200% icon 33 are displayed on the displayer circuitry 204, in which case the controller circuitry 102 determines which icon is selected and inputted on the input circuitry 202. When the 50% icon 31 is selected, the controller circuitry 102 settles 50% of the velocity used before the stop instruction with respect to the velocities of the devices (e.g., the robot device 300 and the pipette 612) instructed to stop in S402. When the 100% icon 32 is selected, the controller circuitry 102 settles 100% of the velocity used before the stop instruction with respect to the velocities of the devices instructed to stop in S402. In other words, the controller circuitry 102 settles that the velocity is not changed. When the 200% icon 33 is selected, the controller circuitry 102 settles 200% of the velocity used before the stop instruction with respect to the velocities of the devices instructed to stop in S402. The changeable velocities are exemplified by the velocities that are 50% and 200% of the velocity used before the stop instruction. When icons and other equivalent symbols indicating other velocities are selected, the controller circuitry 102 settles changes to the velocities based on the selected icons and other equivalent symbols. The controller circuitry 102 displays the icons and other equivalent symbols indicating the changeable velocities on the displayer circuitry 204 to prepare for the input through the input circuitry 202, thereby enabling the velocities to be easily changed.

In S602, the controller circuitry 102 determines whether the device velocity settled in S601 is changed from the velocity used before the stop instruction. When the velocity is not changed (S602; NO), the processing is finished. When the velocity is changed (S602; YES), the processing diverts to S603.

In S603, the controller circuitry 102 displays the post-changing velocities on the displayer circuitry 204. The user is enabled to recognize the post-changing velocities through the display on the displayer circuitry 204.

In S604, the controller circuitry 102 stores the present scenario as a backup in the storage circuitry 104. The controller circuitry 102 changes a scenario name of the present scenario so as to make the backup itself recognizable, and stores the changed scenario name in the storage circuitry 104.

In S605, the controller circuitry 102 creates a new scenario reflecting the changed velocities in the present scenario, and stores the new scenario in the storage circuitry 104. The modified scenario is thus created.

### <<Operation Flow of Trajectory Correction Process>>

FIG. 11 is a flowchart illustrating an example of an operation flow of a trajectory correction process in S408.

In S701, the controller circuitry 102 determines whether the touch release is detected on the input circuitry 202. The touch release connotes that the user finger and other equivalent physical parts do not contact the touch panel of the input circuitry 202. When the touch release is not detected (the user finger and other equivalent physical parts contact the touch panel of the input circuitry 202) (S701; YES), the processing proceeds to S702. In this case, it is interpreted that the trajectory correction continues. When the touch release is detected (S701; NO) the processing diverts to S707. In this case, it is interpreted that the trajectory correction is finished.

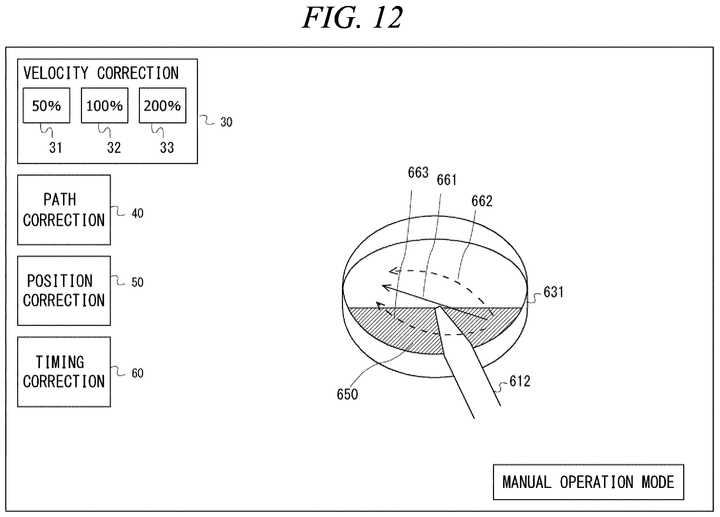

FIG. 12 is a diagram illustrating an example of a screen displayed in the trajectory correction process. The screen in FIG. 12 is displayed on the displayer circuitry 204 of the terminal apparatus 200 for the trajectory correction process. Displayed, similarly to FIG. 8, on the screen in FIG. 12 are the operation target pipette 612, the well 631 of the operation target well plate 614, and the liquid 650 reserved in the well 631, the images of which are captured by the camera of the detection apparatus 400. A first path line 661 defined as a currently selected trajectory (path line) of the operation target pipette 612, is indicated by an arrowed solid line on the screen. The currently selected trajectory (path line) before the correction is a present trajectory (path line) of the operation target pipette 612. A proximal end of the arrowed line indicates a start position of the moving path of the operation target pipette 612, while a distal end of the arrowed line indicates an end position of the moving path of the operation target pipette 612. The moving path of the pipette 612 extends along the arrowed line. This is the same with other arrowed lines. A second path line 662 and a third path line 663 indicate correctable trajectories (path lines). The second path line 662 and the third path line 663 are indicated by dotted lines as the correctable trajectories (path lines).

In S702, the controller circuitry 102 flickers the currently selected path line displayed on the displayer circuitry 204. The flickering display of the currently selected trajectory line facilitates user visual recognition of the currently displayed trajectory line.

In S703, the controller circuitry 102 displays correctable path lines in the periphery of the currently selected path line displayed on the displayer circuitry 204. The correctable path lines are candidates for the changeable path lines.

FIG. 12 is a diagram illustrating an example of the screen displayed in the trajectory correction process. The screen in FIG. 12 is displayed on the displayer circuitry 204 of the terminal apparatus 200 for the trajectory correction process. Displayed, similarly to FIG. 8, on the screen in FIG. 12 are the operation target pipette 612, the well 631 of the operation target well plate 614, and the liquid 650 reserved in the well 631, the images of which are captured by the camera of the detection apparatus 400. The first path line 661 as the currently selected trajectory (path line) of the operation target pipette 612, is indicated by the arrowed solid line. The first path line 661 as the currently selected trajectory (path line) is displayed in, e.g., black. The currently selected trajectory (path line) before the correction is a present trajectory (path line) of the operation target pipette 612. The proximal end of the arrowed line indicates a start point of the operation target pipette 612, while a distal end of the arrowed line indicates an end point of the operation target pipette 612. The trajectory of the pipette extends along the arrowed line. This is the same with other arrowed lines. The second path line 662 and the third path line 663 indicate the correctable trajectories (path lines). The second path line 662 and the third path line 663 are indicated by dotted lines as the correctable trajectories (path lines). The second path line 662 and the third path line 663 are displayed in, e.g., red as the correctable trajectories (path lines). The selected path line and the correctable path line are displayed in different colors, thereby facilitating a distinction between those path lines.

In S704, the controller circuitry 102 determines whether a swipe operation is detected through the input circuitry 202, moving from a position of the currently selected path line (e.g., the first path line 661) to a position of the correctable path line (e.g., the second path line 662), which are displayed on the displayer circuitry 204. The swipe operation is an operation indicating a change of the path line (e.g., from the first path line 661 to the second path line 662) of the processing target instrument (e.g., the pipette 612). When the swipe operation is detected (S704; YES), the processing proceeds to S705. When the swipe operation is not detected (S704; NO), the processing loops back to S701.

In S705, the controller circuitry 102 sets, as a solid line, the correctable path line (e.g., the second path line 662) in the position of the end point of the swipe operation detected in S704, and flickers the solid line on the displayer circuitry 204. Herein, this path line becomes the currently selected path line. The change is accepted through the swipe operation, and the user is thereby enabled to easily change the trajectory of the operation target device.

In S706, the controller circuitry 102 displays correctable path lines in the periphery of the currently selected path line displayed on the displayer circuitry 204. The correctable path lines are candidates for the changeable path lines.

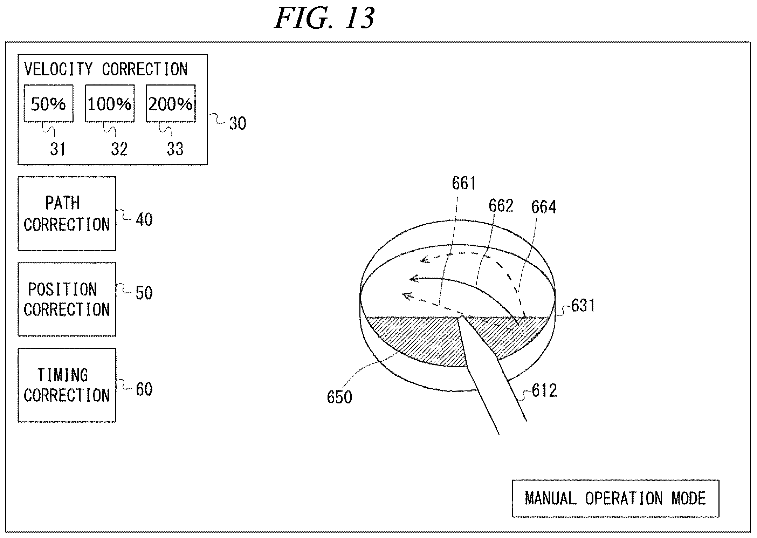

FIG. 13 is a diagram illustrating an example of the screen displayed in the trajectory correction process. The screen in FIG. 13 is displayed on the displayer circuitry 204 of the terminal apparatus 200 for the trajectory correction process. Displayed, similarly to FIG. 12, on the screen in FIG. 13 are the operation target pipette 612, the well 631 of the operation target well plate 614, and the liquid 650 reserved in the well 631, the images of which are captured by the camera of the detection apparatus 400. The second path line 662 as the currently selected trajectory (path line) of the operation target pipette 612, is indicated by the arrowed solid line. The second path line 662 as the currently selected trajectory (path line) is displayed in, e.g., black. The first path line 661 and a fourth path line 664 indicate the correctable trajectories (path lines). Herein, the third path line 663 is not displayed. The first path line 661 and the fourth path line 664 are indicated by dotted lines by way of the correctable trajectories (path lines). The first path line 661 and the fourth path line 664 serving as the correctable trajectories (path lines) are displayed in, e.g., red. The selected path line and the correctable path lines are displayed in different colors, thereby facilitating the distinction between these path lines. The correctable trajectories are displayed together with the currently selected trajectory, whereby the user is easy to recognize a difference between the currently selected trajectory and the post-changing trajectory.

In S707, the controller circuitry 102 makes, non-displayed, the correctable path lines to be displayed on the displayer circuitry 204. In other words, only the currently selected path line among the path lines is displayed on the screen displayed on the displayer circuitry 204.

In S708, the controller circuitry 102 stops flickering the currently selected path line displayed on the displayer circuitry 204. Namely, the selected path line is normally displayed on the screen displayed on the displayer circuitry 204. This path line becomes the post-changing path line. To be specific, the controller circuitry 102 settles the currently selected path line as the post-changing (post-correcting) path line.

In S709, the controller circuitry 102 stores the present scenario as the backup in the storage circuitry 104. The controller circuitry 102 changes a scenario name of the present scenario so as to make the backup itself recognizable, and stores the changed scenario name in the storage circuitry 104.

In S710, the controller circuitry 102 creates a new scenario reflecting the changed trajectory (path line) in the present scenario, and stores the new scenario in the storage circuitry 104. The modified scenario is thus created.

### <<Operation Flow of Position Correction Process>>

FIG. 14 is a flowchart illustrating an example of an operation flow of a position correction process in S409.

In S801, the controller circuitry 102 displays a start position and an end position of the processing target instrument, and a grid. The grid is defined as closing lines serving as reference marks when specifying the start position and the end position. The grid width (a space between adjacent vertical lines) and the grid height (a space between adjacent horizontal lines) may be adjusted at the stage of creating the scenario.

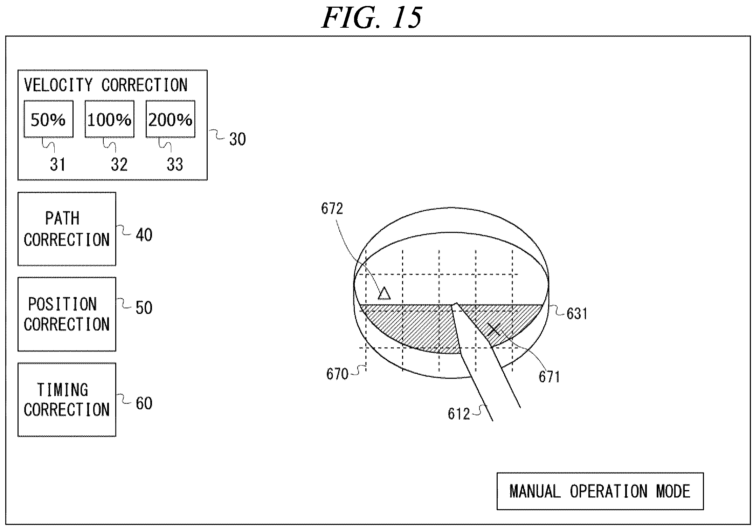

FIG. 15 is a diagram illustrating an example of a screen displayed on the displayer circuitry 204. Displayed on the screen in FIG. 15 are the operation target pipette 612, the well 631 of the operation target well plate 614, and the liquid 650 reserved in the well 631, the images of which are captured by the camera of the detection apparatus 400. Displayed further on the screen in FIG. 15 are a start position 671 and an end position 672 of the operation target pipette 612, and a grid 670 structured by a plurality of vertical lines and a plurality of horizontal lines. The grid 670 is displayed adjusting to the positions of the pipette 612, the well plate 614 and other equivalent instruments, which are detected from the images captured by the camera of the detection apparatus 400. The pipette 612, the well plate 614 and other equivalent instruments may be displayed in the form of illustrations, and the grid 670 may also be displayed adjusting to the illustrations.

In S802, the controller circuitry 102 determines whether an event is detected on the input circuitry 202. Herein, the event connotes selecting correctable parameters (start position and the end position). The controller circuitry 102 displays, on the displayer circuitry 204, icons representing the correctable parameters at the point of present time. The controller circuitry 102 determines that the event is detected when detecting the selection of any one of the icons through the input circuitry 202. It is herein assumed that "positions" are given as the correctable parameters. When the event "position" is selected (S802; YES), the processing proceeds to S803. In the example of FIG. 15, when the start position 671 and the end position 672 are selected, it is assumed that the event "position" is detected. When the event is not detected (S802; NO), the processing diverts to S804.

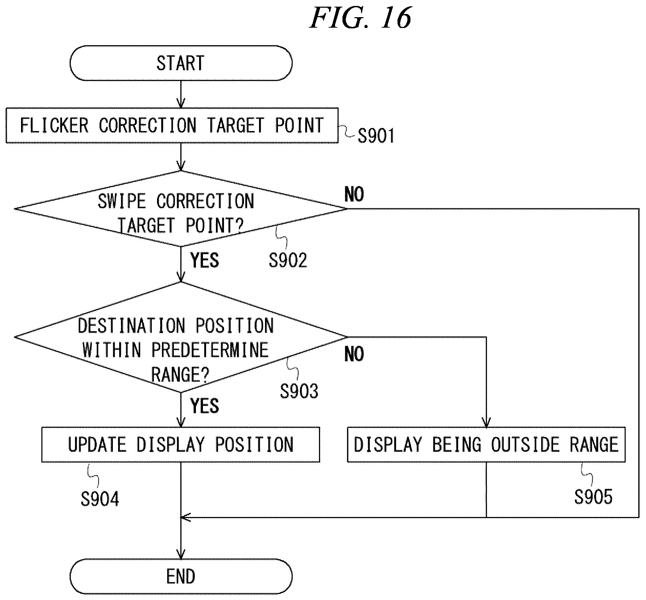

In S803, the controller circuitry 102 executes a position correction process. Details of S803 will be described with reference to an operation flow in FIG. 16. Thereafter, the processing proceeds to S804.

In S804, the controller circuitry 102 determines whether the touch release is detected on the input circuitry 202. The touch release connotes that the user finger and other equivalent physical parts do not contact the touch panel of the input circuitry 202. When the user finger and other equivalent physical parts contact the touch panel, this state does not represent the touch release. When the touch release is not detected (the user finger and other equivalent physical parts contact the touch panel of the input circuitry 202) (S804; NO), the processing loops back to S801. When the touch release is detected (S804; YES), the processing diverts to S805.

In S805, the controller circuitry 102 makes, non-displayed, the grid to be displayed on the displayer circuitry 204. To be specific, the start position and the end position of the processing target instrument are displayed on the screen displayed on the displayer circuitry 204.

In S806, the controller circuitry 102 stops flickering the currently selected start position or end position displayed on the displayer circuitry 204. Namely, the start position and the end position normally displayed on the screen displayed on the displayer circuitry 204. The start position and the end position become the post-changing start and end positions. To be specific, the controller circuitry 102 settles the currently displayed start and end positions as the post-changing (post-correcting) start and end positions.

In S807, the controller circuitry 102 stores the present scenario as a backup in the storage circuitry 104. The controller circuitry 102 changes a scenario name of the present scenario so as to make the backup itself recognizable, and stores the changed scenario name in the storage circuitry 104.

In S808, the controller circuitry 102 creates a new scenario reflecting the changed start and end positions in the present scenario, and stores the new scenario in the storage circuitry 104. The modified scenario is thus created.

### <<Operation Flow of Position Correction>>

FIG. 16 is a flowchart illustrating an example of an operation flow of the position correction in S803.

In S901, the controller circuitry 102 determines selected correction target points. The controller circuitry 102 determines which point (the start position 671 or the end position 672) is selected in the event "position" through the input circuitry 202. For example, as in FIG. 15, when the start position 671 and the end position 672 are displayed on the displayer circuitry 204, the controller circuitry 102 determines which position is selected and inputted to the input circuitry 202. When the start position 671 is selected, the controller circuitry 102 flicker-displays the start position 671 on the displayer circuitry 204. When the end position 672 is selected, the controller circuitry 102 flicker-displays the end position 672 on the displayer circuitry 204. The flicker-displayed point (the start position 671 or the end position 672) is a correction target point.

In S902, the controller circuitry 102 determines whether a swipe operation is detected, in which the swipe moves from a position (a center of a grid cell) of the correction target point (the start position 671 or the end position 672) to a central position of another grid cell as displayed on the displayer circuitry 204. In the swipe operation, the correction target point is the start position of the swipe operation, and the central position of another grid cell is the end position of the swipe operation. The central position of another grid cell is a position that is different from the start position 671 and the end position 672. The swipe operation is an operation indicating a change the position (the start position 671 or the end position 672) of the processing target instrument (e.g., the pipette 612). When the swipe operation is detected (S902; YES), the processing proceeds to S903. When the swipe operation is not detected (S902; NO), the processing is finished.

In S903, the controller circuitry 102 determines whether the end position of the swipe operation detected in S902 exists within a predetermined range. An area, in which the start position 671 and the end position 672 are settable, is predetermined as a predetermined range.
Hence, when a position (point) of a moving destination is not within the predetermined range, the start position 671 or the end position 672 remains unchanged. When the end position of the swipe operation detected in S902 is within the predetermined range (S903; YES), the processing proceeds to S904. When the end position of the swipe operation detected in S902 is not within the predetermined range (S903; NO), the processing diverts to S905.

In S904, the controller circuitry 102 changes the display position of the correction target point to the end position of the swipe operation detected in S902. The controller circuitry 102 sets the changed position as a post-changing position of the correction target point. The start position and the end position are displayed on the displayer circuitry 204, the user is thereby enabled to easily recognize the start position and the end position. The user is enabled to easily change the start position or the end position of the processing target instrument by accepting the change of the start position or the end position through the swipe operation.

In S905, the controller circuitry 102 displays on the displayer circuitry 204 an indication that the destination position to which the correction target point is changed is outside the predetermined range. The displayed indication makes the user recognize that the changed position (destination position) is outside the predetermined range (in which the start position 671 or the end position 672 are settable).

### <<Operation Flow of Timing Correction Process>>

FIG. 17 is a flowchart illustrating an example of an operation flow of the timing correction process in S410.

In S1001, the controller circuitry 102 displays a screen for accepting a timing correction of a timing correctable operation in the operations of the operation target device on the displayer circuitry 204. The timing correctable operation is previously set for every operation. For example, when a discharge start timing, a moving start timing and a discharge end timing of the pipette 612 are changeable, the controller circuitry 102 displays icons for adjusting the respective timings on the displayer circuitry 204.

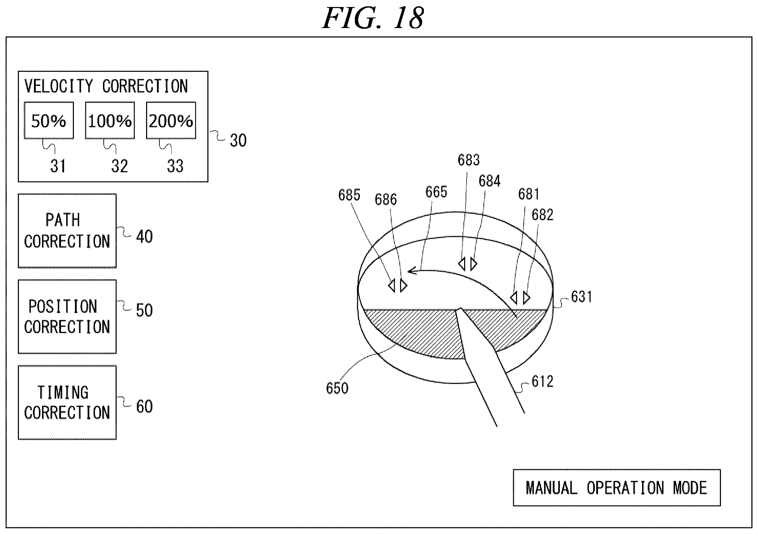

FIG. 18 is a diagram illustrating an example of the screen displayed on the displayer circuitry 204. FIG. 18 illustrates the example of the screen for accepting the timing corrections. It is herein assumed that the discharge start timing, the moving start timing and the discharge end timing of the pipette 612 are changeable.
The icons for the timing corrections are displayed on the screen in FIG. 18. The icons for the timing adjustments include a first discharge start icon 681, a second discharge start icon 682, a first movement icon 683, a second movement icon 684, a first discharge end icon 685, and a second discharge end icon 686. The first discharge start icon 681 is an icon for an indication to advance the discharge start timing of the pipette 612 by a predetermined period of time. The second discharge start icon 682 is an icon for an indication to retard the discharge start timing of the pipette 612 by a predetermined period of time. The first movement icon 683 is an icon for an indication to advance the movement start timing of the pipette 612 by a predetermined period of time. The second movement icon 684 is an icon for an indication to retard the movement start timing of the pipette 612 by a predetermined period of time. The first discharge end icon 685 is an icon for an indication to advance the discharge end timing of the pipette 612 by a predetermined period of time. The second discharge end icon 686 is an icon for an indication to retard the discharge end timing of the pipette 612 by a predetermined period of time. Displayed on the screen in FIG. 18 are the operation target pipette 612, the well 631 of the operation target well plate 614, and the liquid 650 reserved in the well 631, the images of which are captured by the camera of the detection apparatus 400. A path line 665 of the pipette 612 is further displayed on the screen in FIG. 18.

In S1002, the controller circuitry 102 determines whether the input of the timing correction is detected through input circuitry 202. For example, the screen as in FIG. 18 is displayed, in which case the input of the timing correction is detected by selecting one of the icons. When the input of the timing correction is detected (S1002; YES), the processing proceeds to S1003. When the input of the timing correction is not detected (S1002; NO), the processing is finished.

In S1003, the controller circuitry 102 changes the timing of the operation of the operation target device, based on a content detected in S1002. When the selection of the first discharge start icon 681 is detected, the discharge start timing of the pipette 612 is advanced by the predetermined period of time. When the selection of the second discharge start icon 682 is detected, the discharge start timing of the pipette 612 is retarded by the predetermined period of time. When the selection of the first movement icon 683 is detected, the movement start timing of the pipette 612 is advanced by the predetermined period of time. When the selection of the second movement icon 684 is detected, the movement start timing of the pipette 612 is retarded by the predetermined period of time. When the selection of the first discharge end icon 685 is detected, the discharge end timing of the pipette 612 is advanced by the predetermined period of time. When the selection of the second discharge end icon 686 is detected, the discharge end timing of the pipette 612 is retarded by the predetermined period of time.

In S1004, the controller circuitry 102 stores the present scenario as a backup in the storage circuitry 104. The controller circuitry 102 changes a scenario name of the present scenario so as to make the backup itself recognizable, and stores the changed scenario name in the storage circuitry 104.

In S1005, the controller circuitry 102 creates a new scenario reflecting the changed timings in the present scenario, and stores the new scenario in the storage circuitry 104. The modified scenario is thus created.

The control apparatus 100 modifies the timings and is thereby enabled to smoothly connect the respective operations. Furthermore, since the timing is modifiable for each of the operations exemplified by the discharge start, the movement start and the discharge end of the pipette 612, it is possible to make the operation of the target device based on the scenario closer to human operation (i.e., the operation desired by the user).

### <Creation of Icon>

The controller circuitry 102 of the control apparatus 100 counts a number of times of performing the respective corrections (the velocity correctio, the trajectory correction and the position correction) in the manual operation mode. For example, the controller circuitry 102 counts the number of times of performing each correction whenever the backup of the scenario is stored in the storage circuitry 104 (S604, S709, S807, S1004). When any one of the corrections is performed a number of times equal to or greater than a predetermined number of times, the controller circuitry 102 analyzes a tendency of the correction concerned. The predetermined number of times is set to, for example, 20. Given herein is a description of a case in which the position correction is performed a number of times that becomes equal to or greater than the predetermined number of times. Hereat, the controller circuitry 102 extracts from the storage circuitry 104 all the scenarios stored in the storage circuitry 104 when the position correction is carried out. The controller circuitry 102 analyzes a user correction tendency from the extracted scenarios with the assistance of AI (Artificial Intelligence) analysis. For example, it is assumed from the analyzed results that the position correction is performed a large number of times (e.g., equal to or greater than the predetermined number of times) by moving the start potion rightward by 5cm. The predetermined number of times is, e.g., 5. Additionally, instead of being equal to or greater than the predetermined number of times, another threshold may be equal to or greater than a predetermined ratio (the ratio of the relevant correction's frequency to a total number of corrections). The position correction is given by way of a frequent correction. Hereat, the controller circuitry 102 generates a new icon to carry out the position correction, and display the new icon together with the velocity correction icon 30, the trajectory correction icon 40, the position correction icon 50 and the timing correction icon 60 illustrated in Figures inclusive of FIG. 8 on the displayer circuitry 204. When the new icon is selected as the event in the manual operation mode (S405 in FIG. 7), the controller circuitry 102 creates a scenario reflecting the position correction (changed to attain the position-corrected operation), and stores the created scenario in the storage circuitry 104. This is the same with other corrections (velocity correction and trajectory correction). The user is thereby enabled to easily perform the correction process that is frequently executed.

### (Operations and Effects of Embodiment)

The control apparatus 100 of the information processing system creates the scenario to be executed by the robot device 300 that operates the processing target instruments through the user inputs to the terminal apparatus 200. The scenario is defined as the task program instructing the procedures of the operations to be performed by the operation target robot device 300 and other equivalent devices. The scenario (task program) created by the control apparatus 100 prescribes the operations of the operation target device inclusively of the parameters of the position, the trajectory and the velocity given when the operation target device moves. When the robot device 300 operates based on the created scenario, the control apparatus 100 of the information processing system 10 and accepts the user inputs of the operation corrections to the terminal apparatus 200, thus performing the scenario correction (change). Upon accepting the touch input through the input circuitry 202 during the execution of the scenario, the control apparatus 100 shifts to the manual operation mode, then instructs the stop of the operations of the operation target device, and accepts the inputs to correct the parameters. The operation of the operation target device is decelerated, thereby facilitating the user operation to correct the parameters of the scenario. Hereat, the operation target device changes the velocity at the maximum acceleration. The control apparatus 100 is thereby enabled to smoothly shift to the manual operation mode by restraining the user from being aware of the mode shift. The control apparatus 100 is able to correct the scenario all the time during the execution of the scenario. When shifting the manual operation mode, the control apparatus 100 displays the changeable parameters in the operations of the currently working device on the displayer circuitry 204. The user selects and inputs the changeable parameters to the input circuitry 202, and is thereby enabled to properly change the parameters of the scenario (task program). The control apparatus 100 makes the user correct (change) the parameters of the scenario during the execution of the scenario, thereby enabling the scenario to be easily changed to perform the operations desired by the user. The user is enabled to correct the parameters of the scenario while viewing the images of the device operations on the displayer circuitry 204, which are captured by the camera of the detection apparatus 400. The parameters of the scenario are correctable (changeable) during the execution of the scenario, thereby enabling an improvement of efficiency to correct the scenario. When any of the correction is performed a number of times equal to or greater than the predetermined number of times, the controller circuitry 102 analyzes the tendency of the relevant correction. The controller circuitry 102 generates a new icon for carrying out the correction conducted frequently as a result of the analysis, and displays the new icon together with the velocity correction icon 30 and other equivalent icons on the displayer circuitry 204. When the new icon is selected as the event in the manual operation mode, the controller circuitry 102 creates the scenario for carrying out the relevant correction, and stores the created scenario in the storage circuitry 104. The user is thereby enabled to easily execute the frequently performed correction process.

### <Non-Transitory Computer Readable Recording Medium>

A program for enabling computers, other machines and apparatuses (hereinafter be referred to as "computers or other equivalents) to implement any of the functions described above, may be recorded on a non-transitory computer-readable recording medium. The computer or equivalent is made to read and execute the program in the recording medium, thereby enabling the functions to be provided.

Herein, the non-transitory computer-readable medium refer to a recording medium that accumulates (stores) information including data and programs electrically, magnetically, optically, mechanically, or by chemical action, and is readable by the computer or the equivalent. Components exemplified by a CPU and a memory for building up the computer are provided within the recording medium described above, and the CPU may execute the program.

Among those recording mediums, the recording mediums removable from the computers or the equivalents are exemplified by flexible discs, magneto-optical disks, a CD-ROM, a CD-R/W, a DVD, a DAT, an 8mm tape and a memory card.

The recording mediums fixed within the computers or the equivalents are exemplified by a hard disc and a ROM.

The embodiments discussed above may be carried out in combination to the greatest possible degree.

### [Explanation of reference numerals]

- 10:: Information processing system
- 30:: Velocity correction icon
- 31:: 50% icon
- 32:: 100% icon
- 33:: 200% icon
- 40:: Trajectory correction icon
- 50:: Position correction icon
- 60:: Timing correction icon
- 90:: Information processing apparatus
- 91:: Processor
- 92:: Memory
- 93:: Storage circuitry
- 94:: Input circuitry
- 95:: Output circuitry
- 96:: Communication control circuitry
- 100:: Control apparatus
- 102:: Control circuitry
- 104:: Storage circuitry
- 106:: Communicator circuitry
- 200:: Terminal apparatus
- 202:: Input circuitry
- 204:: Display circuitry
- 300:: Robot device
- 400:: Detection apparatus
- 610:: Instrument
- 611:: Test tube
- 612:: Pipette
- 613:: Container
- 614:: Well plate
- 615:: Flask
- 620:: Table
- 631:: Well
- 650:: Liquid
- 661:: First path line
- 662:: Second path line
- 663:: Third path line
- 664:: Fourth path line
- 670:: Grid
- 671:: Start position
- 672:: End position
- 681:: First discharge start icon
- 682:: Second discharge start icon
- 683:: First movement icon
- 684:: Second movement icon
- 685:: First discharge end icon
- 686:: Second discharge end icon

## Claims

1. An information processing system comprising:
an operation target device;
a detection apparatus including a camera to capture an image of the device;
a control apparatus including;
a storage circuitry to store a task program prescribing operations of the operation target device, the program containing parameters of a velocity, a trajectory and a position when the device moves; and
a controller circuitry to operate the device, based on the task program; and
a terminal apparatus including;
an displayer circuitry to display the image captured by the camera; and
an input circuitry to accept a user input,
the controller circuitry issuing an instruction to stop a device operation based on the task program in accordance with the user input to the input circuitry when the device is operated based on the task program, and correcting the device operation prescribed by the task program.

2. The information processing system according to claim 1, wherein the controller circuitry, after issuing the instruction to stop the device operation based on the task program, resumes the device operation at a velocity slower than a velocity of the device operation before the stop instruction but equal to or greater than a predetermined value.

3. The information processing system according to claim 1, wherein the controller circuitry, after issuing the instruction to stop the device operation based on the task program, resumes the device operation at a velocity equal to or greater than a 40% velocity but less than a 60% velocity of the device operation before the stop instruction.

4. The information processing system according to any one of claims 1 through 3, wherein the input circuitry is a touch panel to accept an input by contact, and
the controller circuitry decreases the velocity of the device operation based on the task program when accepting the contact input kept equal to or longer than a predetermined period of time to the input circuitry during the device operation based on the task program.

5. The information processing system according to any one of claims 1 through 3, wherein the controller circuitry displays changeable parameters of the task program on the displayer circuitry, and accepts inputs of the parameters displayed on the displayer circuitry.

6. The information processing system according to any one of claims 1 through 3, wherein the controller circuitry, when correcting the device operation prescribed by the task program, displays a device trajectory prescribed by the task program and a changeable device trajectory on the displayer circuitry, and corrects the device trajectory prescribed by the task program to the changeable trajectory when accepting an input of a change to the changeable trajectory through the input circuitry.

7. The information processing system according to any one of claims 1 through 3, wherein the input circuitry is a touch panel to accept an input by contact, and
the controller circuitry, when correcting the device operation prescribed by the task program, displays a device trajectory prescribed by the task program and a changeable device trajectory on the displayer circuitry, and corrects the device trajectory prescribed by the task program to the changeable trajectory when accepting an input of a swipe operation to the changeable trajectory from the device trajectory through the input circuitry.

8. The information processing system according to any one of claims 1 through 3, wherein the controller circuitry, when correcting the device operation prescribed by the task program, displays a changeable velocity of the device operation on the displayer circuitry, and corrects the device velocity prescribed by the task program to the changeable velocity when accepting an input of the device changeable velocity through the input circuitry.

9. The information processing system according to any one of claims 1 through 3, wherein the controller circuitry, when correcting the device operation prescribed by the task program, displays a start position as a start point and an end position as an end point of the device operation prescribed by the task program on the displayer circuitry, and, when accepting an input of a post-changing position of the start position or a post-changing position of the end position through the input circuitry, corrects the start position or the end position each prescribed by the task program to the post-changing position.

10. The information processing system according to any one of claims 1 through 3, wherein the input circuitry is a touch panel to accept an input by contact, and
the controller circuitry, when correcting the device operation prescribed by the task program, displays a start position as a start point and an end position as an end point of the device operation prescribed by the task program on the displayer circuitry, and, when accepting an input of a swipe operation from the start position or the end position to a position different from the start position or the end position through the input circuitry, corrects the start position or the end position each prescribed by the task program to the different position.

11. The information processing system according to any one of claims 1 through 3, wherein the input circuitry is a touch panel to accept an input by contact, and
the controller circuitry, when correcting the device operation prescribed by the task program, displays a changeable timing of the device operation prescribed by the task program on the displayer circuitry, and, when accepting an input of the changeable timing through the input circuitry, changes the changeable timing of the device operation prescribed by the task program.

12. The information processing system according to any one of claims 1 through 3, wherein the controller circuitry analyzes a correction as the change of the device operation prescribed by the task program, extracts, as a frequent correction, the correction as the change of the device operation performed a number of times equal to or greater than a predetermined number of times, displays the frequent correction on the displayer circuitry, and, when the frequent correction is inputted through the input circuitry, changes the task program so that the device operation becomes an operation being already corrected by the frequent correction.

13. An information processing method implemented by an information processing system including:
an operation target device; a detection apparatus having a camera;
a control apparatus having a storage circuitry configured to store a task program prescribing a device operation, the task program containing parameters of a velocity, a trajectory and a position when the device moves; and a controller circuitry; and
a terminal apparatus having an displayer circuitry and an input circuitry,
the method comprising:
capturing, by the camera, an image of the operation target device;
operating, by the controller circuitry, the device, based on the task program,
displaying, by the displayer circuitry, the image captured by the camera;
accepting, by the input circuitry, a user input; and
issuing, by the controller circuitry, an instruction to stop a device operation based on the task program in accordance with the user input to the input circuitry when the device is operated based on the task program; and
correcting, by the controller circuitry, the device operation prescribed by the task program.
